# EUROPÄISCHE PATENTSCHRIFT

(11) **EP 2 269 851 B1**
(45) Veröffentlichungstag und Bekanntmachung des Hinweises auf die Patenterteilung: **10.08.2016**
(21) Anmeldenummer: 10006183.7
(22) Anmeldetag: 15.06.2010
(51) Int. Cl.: B60J 1/10, B60R 13/04, B60J 10/00

(54) **Seitenscheibe für ein Kraftfahrzeug**
Side window for a motor vehicle
Vitre latérale pour un véhicule automobile

(30) Priorität: 29.06.2009 DE 102009031006
(43) Veröffentlichungstag der Anmeldung: 05.01.2011
(73) Patentinhaber: DURA Automotive Body and Glass Systems GmbH, 58840 Plettenberg (DE)
(72) Erfinder: Lauderlein, Christian, 59757 Arnsberg (DE); König, Matthias, 58706 Menden (DE); Wiebicke, Frank, 58849 Herscheid (DE); Gerndorf, Ralf, 57413 Finnentrop (DE)
(74) Vertreter: Zinnecker, Armin

(56) Entgegenhaltungen:
- EP-A2- 0 268 815
- DE-A1- 4 008 702
- DE-A1- 10 001 430
- DE-B3- 10 255 669
- FR-A1- 2 577 483
- FR-A1- 2 787 074

## Beschreibung

Die Erfindung betrifft eine Seitenscheibe für ein Fahrzeug, insbesondere für ein Kraftfahrzeug, eine Blende für eine derartige Seitenscheibe, eine Seitenscheibenanordnung für ein Fahrzeug, insbesondere ein Kraftfahrzeug, die eine derartige Seitenscheibe und eine derartige Blende umfaßt, und ein Fahrzeug, insbesondere ein Kraftfahrzeug, mit einer deratigen Seitenscheibenanordnung.

Die Seitenscheibe umfaßt eine Scheibe, die eine Umspritzung aus Kunststoff aufweist, an der eine Blende befestigbar oder befestigt ist. Die Blende kann an der Umspritzung lösbar oder unlösbar befestigbar oder befestigt sein. Die Scheibe kann aus Glas oder Kunststoff hergestellt sein. Die Umspritzung umgibt den äußeren Umfang der Scheibe vorzugsweise vollständig. Sie umfaßt vorzugsweise eine Dichtung.

Aus der DE 40 08 702 A1 ist eine Scheibe für ein Fahrzeug bekannt, die in einem Rahmen aufgenommen ist, welcher durch Umspritzen der Scheibe erzeugt wurde. Zur Befestigung des Rahmens in dem Fensterausschnitt der Fahrzeugkarosserie sind an der Rückseite der der Fahrzeugsäule zugewandten Seite des Rahmens Befestigungswinkel angeordnet.

Die DE 10 2007 012 486 A1 offenbart ein Glasfestelement für ein Fahrzeugdach mit einem Halterahmen, der von einer Umschäumung aus Polyurethan gebildet wird.

Aus der DE 38 40 287 A1 ist eine Kraftfahrzeugscheibe mit einer Umspritzung bekannt, an der eine Zierleiste befestigt ist.

Die DE 299 05 606 U1 offenbart eine Kraftfahrzeugscheibe mit einer Scheibenumspritzung, an der eine Blende durch metallische Federklemmen befestigt ist.

Eine Seitenscheibe nach dem Oberbegriff des Anspruchs 1 ist aus der DE 102 55 669 B3 bekannt.

Die DE 100 01 430 A1, die FR 2 577 483 A1 und die EP 0 268 815 A2 zeigen ähnliche Seitenscheiben.

Aufgabe der Erfindung ist es, eine verbesserte Seitenscheibe dieser Art vorzuschlagen.

Erfindungsgemäß wird diese Aufgabe dadurch gelöst, daß die Umspritzung an ihrer Vorderseite eines oder mehrere Befestigungselemente aufweist. Die Befestigungselemente sind leistenförmig. Sie weisen jeweils eine Einführschräge auf. Die zugehörige Blende weist entsprechende, komplementäre Befestigungselemente für die Befestigungselemente der Seitenscheibe auf. Auf diese Weise ist es möglich, die Blende an der Umspritzung zu befestigen. Insbesondere kann die Blende an der Umspritzung lösbar befestigt werden.

Die Blende umfaßt vorzugsweise eine erste Komponente aus Kunststoff und eine zweite Komponente aus Kunststoff. Eine derartige Blende ist aus der EP 1 695 808 A1 bekannt. Die vorbekannte Blende umfaßt eine erste Komponente aus Kunststoff, nämlich ein Deckteil aus einem thermoplastischen Kunststoff, und eine zweite Komponente aus Kunststoff, nämlich ein Trägerteil aus einem thermoplastischen Kunststoff. Die erste Komponente ist an einer Sichtfläche der Blende vorgesehen. Sie übernimmt eine dekorative Funktion. Die zweite Komponente übernimmt mechanische Funktionen, insbesondere eine Befestigungsfunktion. Die Blende ist in einem Mehrkomponenten-Spritzgußverfahren, insbesondere in einem Zweikomponenten-Spritzgußverfahren (2-K-Verfahren) oder in einem Dreikomponenten-Spritzgußverfahren (3-K-Verfahren) hergestellt. Es ist allerdings auch möglich, die Blende in einem Einkomponenten-Spritzgußverfahren (1-K-Verfahren) herzustellen.

Das oder die Befestigungselemente sind an der Vorderseite der Umspritzung vorgesehen. Die Befestigungselemente sind leistenförmig. Vorteilhaft ist es, wenn die leistenförmigen Befestigungselemente miteinander fluchten.

Vorteilhafte Weiterbildungen sind in den Unteransprüchen beschrieben.

Vorteilhaft ist es, wenn die Umspritzung an einer weiteren Seite eines oder mehrere weitere Befestigungselemente für die Blende aufweist. Die weiteren Befestigungselemente können an der Vorderseite, der Rückseite und/oder der Stirnseite der Umspritzung vorgesehen sein. Vorteilhaft ist es, wenn sie an der Vorderseite oder der Rückseite der Umspritzung vorgesehen sind. Die Befestigungselemente sind vorzugsweise leistenförmig ausgestaltet. Vorteilhaft ist es, wenn die leistenförmigen Befestigungselemente miteinander fluchten.

Eine weitere vorteilhafte Weiterbildung ist dadurch gekennzeichnet, daß die Umspritzung an einer Seite, vorzugsweise an der Stirnseite, einen oder mehrere Abstandhalter aufweist. Wenn mehrere Abstandhalter vorgesehen sind, können deren Höhen auf den Verlauf der Blende abgestimmt sein.

Vorteilhaft ist es, wenn die Umspritzung an einer Seite ein Rastelement aufweist. Vorzugsweise befindet sich das Rastelement an der Stirnseite der Umspritzung. Es ist möglich, daß mehrere Rastelemente vorgesehen sind.

Das Rastelement ist vorzugsweise als Lasche ausgestaltet.

Eine erfindungsgemäße Blende für eine erfindungsgemäße Seitenscheibe ist durch Befestigungselemente für die Befestigungselemente der Seitenscheibe gekennzeichnet. Die Befestigungselemente der Blende entsprechen den Befestigungselementen der Seitenscheibe. Sie sind zu den Befestigungselementen der Seitenscheibe komplementär. Die Befestigungselemente sind als Befestigungstaschen ausgestaltet.

Vorteilhaft ist es, wenn die Blende weitere Befestigungselemente für die weiteren Befestigungselemente der Seitenscheibe aufweist. Die weiteren Befestigungselemente der Blende entsprechen den weiteren Befestigungselementen der Seitenscheibe. Sie sind vorzugsweise zu diesen komplementär. Bei den weiteren Befestigungselementen kann es sich insbesondere um weitere Befestigungstaschen handeln.

Nach einer weiteren vorteilhaften Weiterbildung sind an der Blende Widerlager für die Abstandhalter der Seitenscheibe vorgesehen.

Vorteilhaft ist es, wenn die Blende eine oder mehrere Raststufen für das Rastelemente der Seitenscheibe aufweist. Wenn mehrere Raststufen vorhanden sind, besteht eine Einstellmöglichkeit für die Blende an der Seitenscheibe. Diese Einstellmöglichkeit kann insbesondere zum Toleranzausgleich genutzt werden.

Die Erfindung betrifft ferner eine Seitenscheibenanordnung für ein Fahrzeug, insbeosndere für ein Kraftfahrzeug, die durch eine erfindungsgemäße Seitenscheibe und eine oder mehrere erfindungsgemäße Blenden gekennzeichnet ist.

Vorteilhaft ist es, wenn das oder die Befestigungselemente und/oder das oder die weiteren Befestigungselemente und/oder der oder die Abstandhalter und/oder das oder die Rastelemente an einer Seite der Umspritzung der Seitenscheibe vorgesehen sind, die im wesentlichen in vertikaler Richtung verläuft.

Die Erfindung betrifft schließlich ein Fahrzeug, insbesondere ein Kraftfahrzeug, das durch eine oder mehrere erfindungsgemäße Scheibenanordnungen gekennzeichnet ist.

Ein Ausführungsbeispiel der Erfindung wird nachstehend anhand der beigefügten Zeichnung im einzelnen erläutert. In der Zeichnung zeigt
- Fig. 1: eine Blende in einer Seitenansicht von vorne,
- Fig. 2: eine Seitenscheibe in einer Seitenansicht von vorne,
- Fig. 3: eine Seitenscheibenanordnung mit einer Blende gemäß Fig. 1 und mit einer Seitenscheibe gemäß Fig. 2 von vorne,
- Fig. 4: die Blende gemäß Fig. 1 in einer Seitenansicht von hinten,
- Fig. 5: die Seitenscheibe gemäß Fig. 2 in einer Seitenansicht von hinten,
- Fig. 6: die Seitenscheibenanordnung gemäß Fig. 3 in einer Seitenansicht von hinten,
- Fig. 7: einen Schnitt durch die Seitenscheibenanordnung gemäß Fig. 3 und 6, wobei sich die Schnittebene im Bereich eines Befestigungselements an der Vorderseite der Seitenscheibe und außerhalb der Abstandhalter befindet,
- Fig. 8: einen weiteren Schnitt durch die Seitenscheibenanordnung gemäß Fig. 3 und 6, wobei sich die Schnittebene im Bereich eines Befestigungselements an der Vorderseite der Seitenscheibe und im Bereich eines Abstandhalters befindet,
- Fig. 9: einen Schnitt durch die Seitenscheibenanordnung gemäß Fig. 3 und 6, wobei sich die Schnittebene im Bereich eines weiteren Befestigungselements an der Rückseite der Seitenscheibe und außerhalb der Abstandhalter befindet,
- Fig. 10: eine vergrößerte Teilansicht aus der Fig. 6 und
- Fig. 11: einen vergrößerten Ausschnitt aus der Fig. 10.

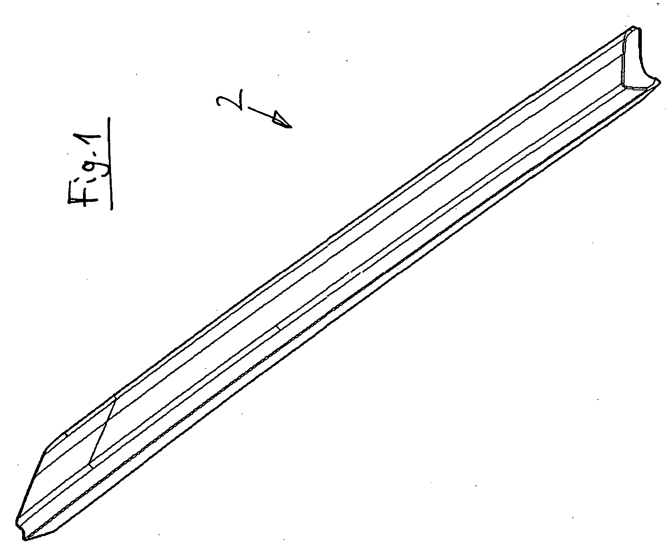

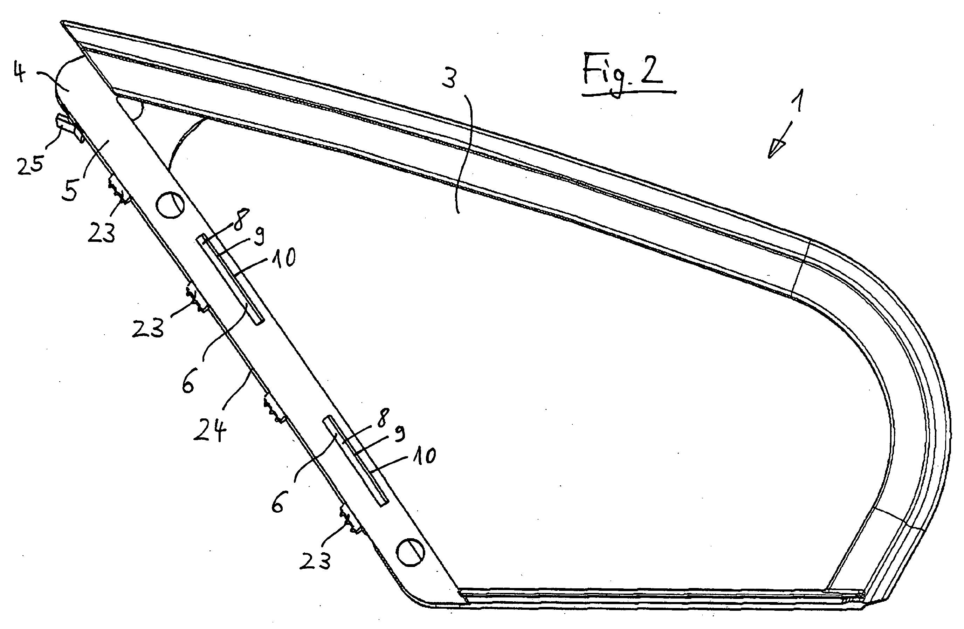

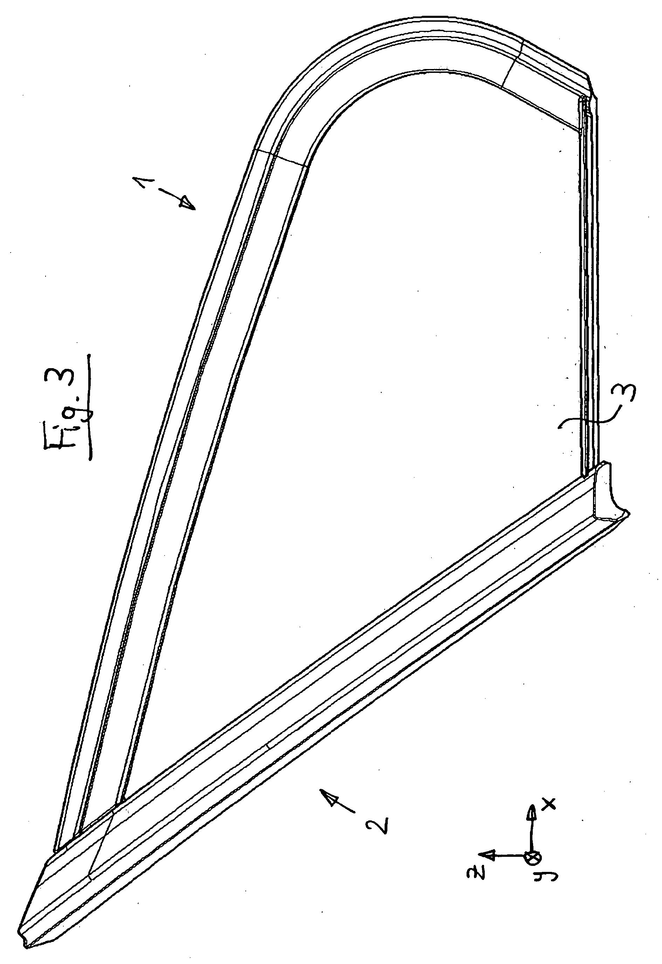

Die in Fig. 3 gezeigte Seitenscheibenanordnung umfaßt eine Seitenscheibe 1 gemäß Fig. 2 und eine Blende 2 gemäß Fig. 1, die mit der Seitenscheibe 1 verbunden ist. Wie aus Fig. 2 und 3 ersichtlich umfaßt die Seitenscheibe 1 eine Scheibe 3 aus Glas oder Kunststoff und eine Umspritzung 4 aus Kunststoff, an der die Blende 2 befestigbar ist. Die Blende 2 kann in X-Richtung auf der Umspritzung 4 der Seitenscheibe 1 montiert und verrastet werden. Die X-Richtung verläuft in FahrzeugLängsrichtung, die Y-Richtung verläuft waagrecht und quer zur FahrzeugLängsrichtung und die Z-Richtung verläuft vertikal nach oben.

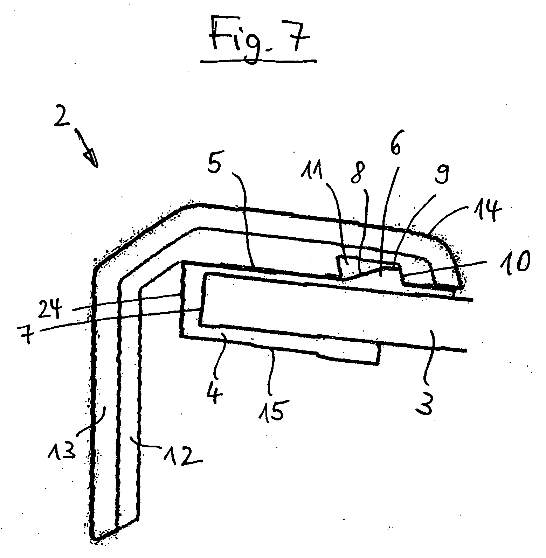

Wie insbesondere aus Fig. 2 ersichtlich weist die Umspritzung 4 an ihrer Vorderseite 5 Befestigungselemente 6 für die Blende 2 auf. Die Befestigungselemente 6 sind leistenförmig. Es handelt sich um zwei leistenförmige Befestigungselemente, die in Längsrichtung der Umspritzung 4, also parallel zur zugehörigen Kante 7 (Fig. 7) der Scheibe 3 verlaufen. Die leistenförmigen Befestigungselemente 6 sind voneinander beabstandet und fluchten miteinander.

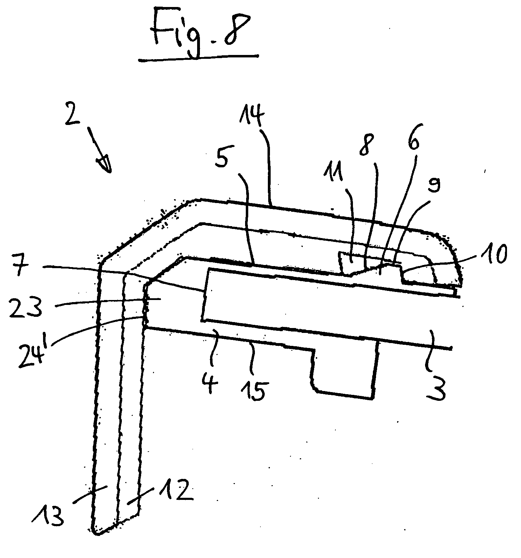

Wie aus Fig. 7 und 8 ersichtlich weisen die Befestigungselemente 6 jeweils eine Einführschräge 8 auf, die gegenüber der Ebene der Scheibe 3 geneigt verläuft, und zwar in der Weise, daß ihr Abstand von der Scheibe 3 mit zunehmender Entfernung von der Kante 7 zunimmt. In Richtung von der Kante 7 weg schließt sich an die Einführschräge 8 ein ebener Bereich 9 an, der parallel zur Scheibe 3 verläuft, sowie ein steil abfallender Bereich 10, der nahezu senkrecht zur Ebene der Scheibe 3 verläuft. Der steil abfallende Bereich 10 könnte auch senkrecht zur Scheibe 3 verlaufen. Seine Steilheit wird allerdings vorzugsweise derart gewählt, daß die Umspritzung 4 noch aus dem Spritzwerkzeug entfernt werden kann.

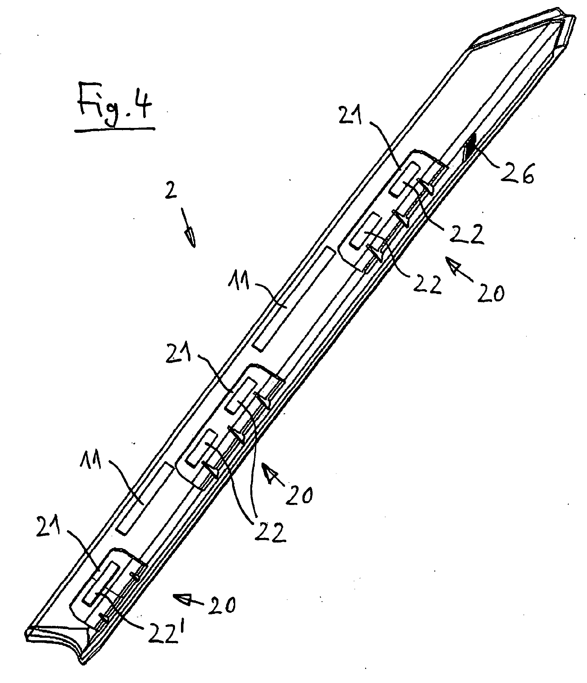

Wie insbesondere aus Fig. 4, 7 und 8 ersichtlich weist die Blende 2 Befestigungselemente 11 auf, die komplementär zu den Befestigungselementen 6 der Umspritzung 4 der Seitenscheibe 1 sind. Die Befestigungselemente 11 sind als Befestigungstaschen ausgebildet. Sie befinden sich in der ersten Kunststoffkomponente 12 der 2K-Kunststoffblende 2, die innen liegt und die der Umspritzung 4 und der Scheibe 3 zugewandt ist. Die zweite Kunststoffkomponente 13 der 2K-Kunststoffblende bildet die Außenseite, einschließlich der Sichtfläche 14.

Wie aus Fig. 7 und 8 ersichtlich kann eine Seite der im Querschnitt im wesentlichen L-förmigen Blende 2 bei der Montage durch die Einführschräge 8 aufgebogen werden. In der montierten Stellung gemäß Fig. 7 und 8 verrastet eine Seitenfläche der Befestigungstasche 11 mit dem steil abfallenden Bereich 10 des leistenförmigen Befestigungselements 6.

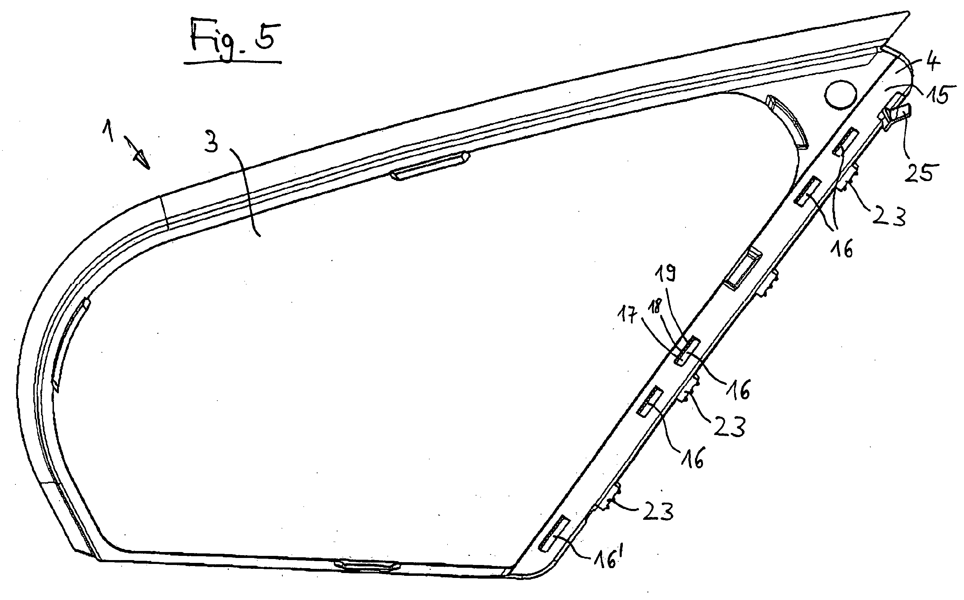

Wie insbesondere aus Fig. 4, 5, 6 und 9 ersichtlich weist die Umspritzung 4 an einer weiteren Seite, nämlich an ihrer Rückseite 15, weitere Befestigungselemente 16 für die Blende 2 auf. Die weiteren Befestigungselemente 16 sind leistenförmig. Sie bestehen aus zwei Gruppen von jeweils zwei leistenförmigen Befestigungselementen 16 und einem weiteren leistenförmigen Befestigungselement 16'. Innerhalb einer Gruppe sind die leistenförmigen weiteren Befestigungselemente 16 im Abstand voneinander und miteinander fluchtend angeordnet. Ferner fluchten die weiteren Befestigungselemente 16 beider Gruppen miteinander und mit dem weiteren Befestigungselement 16'.

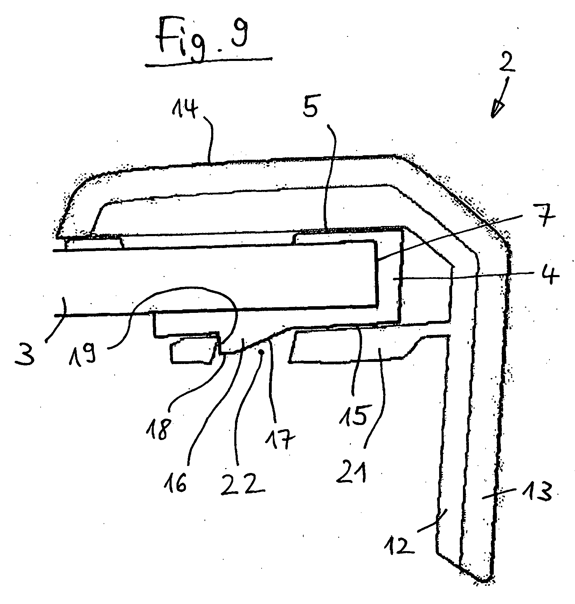

Wie insbesondere aus Fig. 9 ersichtlich umfassen auch die weiteren Befestigungselemente 16, 16' jeweils eine Einführschräge 17, einen ebenen Bereich 18 und einen steil abfallenden Bereich 19. Im Bereich der Einführschräge 17 steigt die Dicke der Umspritzung 4 mit zunehmendem Abstand von der Kante 7 der Scheibe 3 an.

Die Blende 2 weist weitere Befestigungselemente 20 für die weiteren Befestigungselemente 16, 16' der Umspritzung 4 der Seitenscheibe 1 auf, die komplementär zu den weiteren Befestigungselementen 16, 16' sind. Die weiteren Befestigungselemente 20 der Blende 2 bestehen aus Befestigungslaschen 21, die an einer Seite der im wesentlichen L-förmigen Blende 2 vorgesehen sind. Die Befestigungslaschen 21 verlaufen parallel zu und im Abstand von den als Befestigungstaschen ausgebildeten Befestigungselementen 11 der Blende 2. Es sind drei Befestigungslaschen 21 vorhanden, die im Abstand voneinander angeordnet sind und die miteinander fluchten. In zwei Befestigungslaschen 21 sind jeweils zwei im wesentlichen rechteckige Öffnungen 22 vorgesehen, die zu jeweils zwei weiteren leistenförmigen Befestigungselementen 16 der Umspritzung 4 komplementär sind. In einer weiteren Befestigungslasche 21 ist eine im wesentlichen rechteckige Öffnung 22' vorgesehen, die zu dem weiteren leistenförmigen Befestigungselement 16' der Umspritzung 4 komplementär ist.

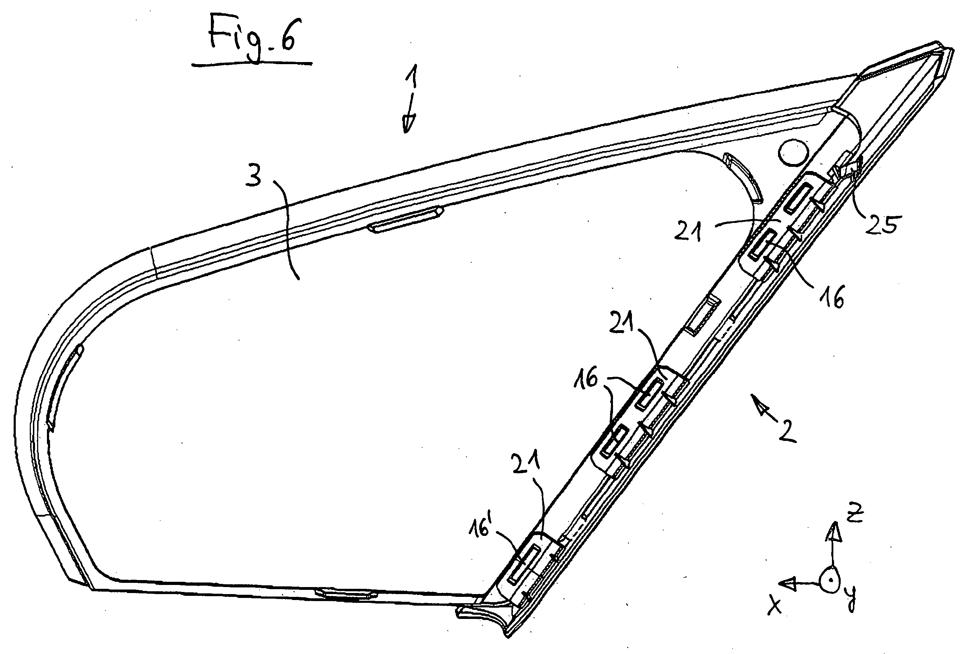

Im montierten Zustand, der in Fig. 6 und 9 gezeigt ist, liegt jedes weitere Befestigungselement 16, 16' in der zugehörigen Öffnung 22, 22'. Bei der Montage können die Enden der Befestigungslaschen 21 durch die Einführschrägen 17 aufgebogen werden. Im montierten Zustand, der in Fig. 6 und 9 gezeigt ist, verrastet der steil abfallende Bereich 19 des jeweiligen weiteren Befestigungselements 16, 16' mit der jeweiligen äußeren Kante der jeweiligen Öffnung 22, 22'.

Wie insbesondere aus Fig. 2, 5 und 8 ersichtlich weist die Umspritzung 4 an ihrer Stirnseite 24 Abstandhalter 23 für die Blende 2 auf. Die Abstandhalter 23 sind im wesentlichen quaderförmig. Sie besitzen an ihrer Oberseite jeweils drei voneinander beabstandete, parallel zueinander verlaufende Stege, die zusammendrückbar sind. An der Blende 2 sind Widerlager 24' für die Abstandhalter 23 vorhanden.

Die Umspritzung 4 weist an einer Seite, nämlich an ihrer Stirnseite 24, ein Rastelement 25 auf, das insbesondere aus Fig. 2, 5, 6 und 10 ersichtlich ist. Das Rastelement 25 ist als Lasche ausgestaltet. Es weist schräg nach außen.

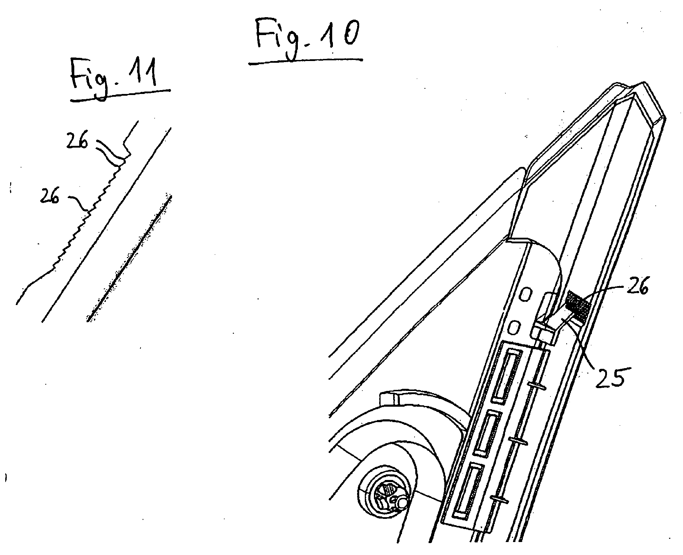

An der Blende 2 sind Raststufen 26 für das Rastelement 25 vorgesehen. Die äußere Endkante des Rastelements 25 verrastet im montierten Zustand mit einer der Raststufen 26. Die Raststufen 26 sind in Fig. 11 vergrößert gezeigt. Sie weisen ein Widerhakenprofil auf, wobei die dem Rastelement 25 zugewandten Flanken der Raststufen 26 kurz und steil verlaufen und die anderen Flanken lang und flach ausgebildet sind.

Die Befestigungselemente 6, die weiteren Befestigungselemente 16, 16', die Abstandhalter 23 und das Rastelement 25 sind an einer Seite der Umspritzung 4 vorgesehen, die im wesentlichen in vertikaler Richtung, also in Z-Richtung verläuft. Mit anderen Worten: Die Umspritzung 4, an der die Befestigungselemente 6, die weiteren Befestigungselemente 16, 16', die Abstandhalter 23 und das Rastelement 25 vorgesehen sind, verläuft im wesentlichen in vertikaler Richtung, also in Z-Richtung. Durch das Rastelement 25 wird eine Einstellmöglichkeit in dieser Z-Richtung geschaffen, die einen Toleranzausgleich in Z-Richtung ermöglicht. Bei der Montage kann die Blende in Z-Richtung nach oben verschoben werden, bis sie die richtige Stellung erreicht hat. Durch die Verrastung des Rastelements 25 mit einer Raststufe 26 wird diese Stellung fixiert; eine Verschiebung der Blende 2 nach unten wird durch die Verrastung verhindert.

Durch die Erfindung wird eine Seitenscheibe für ein Fahrzeug, insbesondere für ein Kraftfahrzeug, geschaffen, bei der eine Blende aus Kunststoff direkt auf eine mit einer Dichtung umspritzte Scheibe aufgerastet werden kann. Eine Verstellmöglichkeit der Blende ist integriert. In der Blende wie auch in der Umspritzung ist eine Rastfunktion integriert. Zum Verrasten bzw. Fügen werden keine zusätzlichen Bauteile (Befestigungselemente) benötigt. Die Blende ist auf der Scheibe in Z-Richtung verschiebbar bzw. einstellbar. Damit können Toleranzen in Z-Richtung ausgeglichen werden.

## Patentansprüche

1. Seitenscheibe für ein Fahrzeug, insbesondere für ein Kraftfahrzeug, mit einer Scheibe (3), die eine Umspritzung (4) aus Kunststoff aufweist, an der eine Blende (2) befestigbar oder befestigt ist, wobei die Umspritzung (4) an einer Seite (5) eines oder mehrere Befestigungselemente (6) aufweist,
**dadurch gekennzeichnet,**
**dass** die Befestigungselemente (6) für die Blende (2) an der Vorderseite der Umspritzung (4) vorgesehen sind, dass sie leistenförmig sind und jeweils eine Einführschräge (8) aufweisen die gegenüber der Ebene der Scheibe (3) geneigt verläuft, und zwar in der Weise, daß ihr Abstand von der Scheibe mit Zunehmender Entfernung von der Kante (7) der Scheibe (3) zunimmt.

2. Seitenscheibe nach Anspruch 1, **dadurch gekennzeichnet, daß** die Umspritzung an einer weiteren Seite (15) eines oder mehrere weitere Befestigungselemente (16, 16') für die Blende (2) aufweist.

3. Seitenscheibe nach Anspruch 1 oder 2, **dadurch gekennzeichnet, daß** die Umspritzung (4) an einer Seite, vorzugsweise an der Stirnseite, einen oder mehrere Abstandhalter (23) aufweist.

4. Seitenscheibe nach einem der vorhergehenden Ansprüche, **dadurch gekennzeichnet, daß** die Umspritzung (4) an einer Seite ein Rastelement (25) aufweist.

5. Seitenscheibe nach Anspruch 4, **dadurch gekennzeichnet, daß** das Rastelement (25) als Lasche ausgestaltet ist.

6. Blende für eine Seitenscheibe nach einem der Ansprüche 1 bis 5, mit Befestigungselementen (11) für die Befestigungselemente (6) der Seitenscheibe (1),
**dadurch gekennzeichnet,**
**dass** die Befestigungselemente (11) der Blende (2) als Befestigungstaschen ausgebildet sind, die zu den Befestigungselementen (6) der Umspritzung (4) der Seitenscheibe (1) komplementär sind.

7. Blende nach Anspruch 6, **gekennzeichnet durch** weitere Befestigungselemente (20) für die weiteren Befestigungselemente (16, 16') der Seitenscheibe (1).

8. Blende nach Anspruch 6 oder 7, **gekennzeichnet durch** Widerlager (24) für die Abstandhalter (23) der Seitenscheibe.

9. Blende nach einem der Ansprüche 6 bis 8, **gekennzeichnet durch** eine oder mehrere Raststufen (26) für das Rastelement (25) der Seitenscheibe (1).

10. Seitenscheibenanordnung für ein Fahrzeug, insbesondere ein Kraftfahrzeug, **gekennzeichnet durch** eine Seitenscheibe (1) nach einem der Ansprüche 1 bis 5 und eine Blende (2) nach einem der Ansprüche 6 bis 9.

11. Seitenscheibenanordnung nach Anspruch 10, **dadurch gekennzeichnet, daß** das oder die Befestigungselemente (6) und/oder die weiteren Befestigungselemente (16, 16') und/oder der oder die Abstandhalter (23) und/oder das Rastelemente (25) an einer Seite der Umspritzung (4) vorgesehen sind, die im wesentlichen in vertikaler Richtung (Z) verläuft.

12. Fahrzeug, insbesondere Kraftfahrzeug, **gekennzeichnet durch** eine Scheibeanordnung nach einem der Ansprüche 1 bis 11.

## Claims

1. A side window for a vehicle, in particular for a motor vehicle, comprising a pane (3) which includes an overmold (4) made of plastics, to which a trim (2) is attachable or attached, wherein on one side (5) the overmold (4) includes one or more fastening elements (6),
**characterized in**
**that** the fastening elements (6) for the trim (2) are provided at the front of the overmold (4), that they are strip-shaped and each include a lead-in chamfer (8) which extends inclined with respect to the plane of the pane (3), namely such that its distance from the pane increases with increasing distance from the edge (7) of the pane (3).

2. The side window according to claim 1, **characterized in that** on a further side (15) the overmold includes one or more further fastening elements (16, 16') for the trim (2).

3. The side window according to claim 1 or 2, **characterized in that** on one side, preferably on the end face, the overmold (4) includes one or more spacers (23).

4. The side window according to any of the preceding claims, **characterized in that** on one side the overmold (4) includes a latching element (25).

5. The side window according to claim 4, **characterized in that** the latching element (25) is designed as tab.

6. A trim for a side window according to any of claims 1 to 5, comprising fastening elements (11) for the fastening elements (6) of the side window (1),
**characterized in**
**that** the fastening elements (11) of the trim (2) are formed as fastening pockets which are complementary to the fastening elements (6) of the overmold (4) of the side window (1).

7. The trim according to claim 6, **characterized by** further fastening elements (20) for the further fastening elements (16, 16') of the side window (1).

8. The trim according to claim 6 or 7, **characterized by** abutments (24) for the spacers (23) of the side window.

9. The trim according to any of claims 6 to 8, **characterized by** one or more latching steps (26) for the latching element (25) of the side window (1).

10. A side window arrangement for a vehicle, in particular a motor vehicle, **characterized by** a side window (1) according to any of claims 1 to 5 and a trim (2) according to any of claims 6 to 9.

11. The side window arrangement according to claim 10, **characterized in that** the fastening element(s) (6) and/or the further fastening elements (16, 16') and/or the spacer(s) (23) and/or the latching elements (25) are provided on a side of the overmold (4) which substantially extends in vertical direction (Z).

12. A vehicle, in particular a motor vehicle, **characterized by** a pane arrangement according to any of claims 1 to 11.

## Revendications

1. Vitre latérale pour un véhicule, en particulier pour un véhicule automobile, comportant une vitre (3) qui présente un surmoulage (4) en matière plastique sur lequel peut être fixé ou est fixé un panneau (2), le surmoulage (4) présentant sur une face (5) un ou plusieurs éléments de fixation (6),
**caractérisée en ce que**
les éléments de fixation (6) pour le panneau (2) sont prévus sur la face antérieure du surmoulage (4), **en ce que** ceux-ci sont en forme de barres et présentent chacun une rampe d'introduction (8) qui s'étend de façon inclinée par rapport au plan de la vitre (3), et cela de manière que sa distance par rapport à la vitre augmente avec l'éloignement croissant de l'arête (7) de la vitre (3).

2. Vitre latérale selon la revendication 1, **caractérisée en ce que** le surmoulage présente sur une autre face (15) un ou plusieurs autres éléments de fixation (16, 16') pour le panneau (2).

3. Vitre latérale selon les revendications 1 ou 2, **caractérisée en ce que** le surmoulage (4) présente sur une face, de préférence sur la face frontale, un ou plusieurs écarteurs (23).

4. Vitre latérale selon l'une des revendications précédentes, **caractérisée en ce que** le surmoulage (4) présente sur une face un élément d'enclenchement (25).

5. Vitre latérale selon la revendication 4, **caractérisée en ce que** l'élément d'enclenchement (25) est configuré sous forme de patte.

6. Ecran pour une vitre latérale selon l'une des revendications 1 à 5, comportant des éléments de fixation (11) pour les éléments de fixation (6) de la vitre latérale (1),
**caractérisé en ce que**
les éléments de fixation (11) du panneau (2) sont réalisés sous forme de poches de fixation qui sont complémentaires aux éléments de fixation (6) du surmoulage (4) de la vitre latérale (1).

7. Panneau selon la revendication 6, **caractérisé par** d'autres éléments de fixation (20) pour les autres éléments de fixation (16, 16') de la vitre latérale (1).

8. Panneau selon les revendications 6 ou 7, **caractérisé par** des butées (24) pour les écarteurs (23) de la vitre latérale.

9. Panneau selon l'une des revendications 6 à 8, **caractérisé par** un ou plusieurs crans d'enclenchement (26) pour l'élément d'enclenchement (25) de la vitre latérale (1).

10. Agencement de vitre latérale pour un véhicule, en particulier pour un véhicule automobile, **caractérisé par** une vitre latérale (1) selon l'une des revendications 1 à 5 et par un panneau (2) selon l'une des revendications 6 à 9.

11. Agencement de vitre latérale selon la revendication 10, **caractérisé en ce que** ledit ou les éléments de fixation (6) et/ou les autres éléments de fixation (16, 16') et/ou ledit ou les écarteurs (23) et/ou l'élément d'enclenchement (25) sont prévus sur une face du surmoulage (4) qui s'étend sensiblement en direction verticale (Z).

12. Véhicule, en particulier véhicule automobile, **caractérisé par** un agencement de vitre selon l'une des revendications 1 à 11.
